# EUROPEAN PATENT SPECIFICATION

(11) **EP 3 803 165 B1**
(45) Date of publication and mention of the grant of the patent: **29.01.2025**
(21) Application number: 19815144.1
(22) Date of filing: 04.06.2019
(51) Int. Cl.: F16J 15/34, B23K 26/364, F16C 33/74, F16J 15/16, F16J 15/40, F16J 15/54

(54) **MECHANICAL SEAL WITH A SEAL FACE HAVING CHANNELS**
GLEITRINGDICHTUNG MIT EINER DICHTUNGSFLÄCHE MIT KANÄLEN
JOINT MÉCANIQUE AVEC UNE FACE D'ÉTANCHÉITÉ DOTÉE DE CANAUX

(30) Priority: 08.06.2018 US 201862682496 P
(43) Date of publication of application: 14.04.2021
(73) Proprietor: JOHN CRANE INC., Chicago, IL 60606 (US)
(72) Inventor: LAI, Wei-Tang, Hoffman Estates, Illinois 60192 (US)
(74) Representative: Hamer, Christopher K.
(86) International application number: PCT/US2019/035305
(87) International publication number: WO 2019/236524

(56) References cited:
- EP-A1- 1 548 338
- EP-A1- 3 252 354
- US-A- 2 536 292
- US-A- 3 804 424
- US-A- 5 201 531
- US-A- 5 498 007
- US-A- 5 498 007
- US-A- 6 132 094
- US-A1- 2004 256 809
- US-A1- 2004 256 809
- US-A1- 2007 187 904
- US-A1- 2015 123 350
- US-A1- 2017 067 510

## Description

### TECHNICAL FIELD

The present disclosure relates generally to rotary mechanical seals for fluid. More particularly, this disclosure relates to seals that include seal faces configured to promote penetration of fluid between the seal faces.

### BACKGROUND

Seals are used in a wide variety of applications including, for example, liquid pumps, mixers, agitators, and the like to provide fluid tight seals. Such seals are used to seal between rotating shafts and a housing in, for example, the chemical, pharmaceutical, gas and oil, power generation, mining and minerals, food and beverage, pulp and paper processing, wastewater and water management, and refrigeration industries. An example seal is an end face seal. End face seals include a seal interface that is lubricated by the fluid to be sealed or a separate barrier fluid introduced into the seal. When a seal interface is lubricated by the fluid to be sealed (e.g., process fluid), the fluid to be sealed may be driven into the seal interface via a hydrostatic effect and/or a hydrodynamic effect. The hydrodynamic effect promotes introducing process fluid into a seal interface with forces that are produced when a rotating portion of a seal interface is rotating, whereas the hydrostatic effect promotes introducing process fluid into a seal interface with just the forces resulting from a pressure differential across the seal interface.

US 5,498,007 describes a mechanical seal assembly having a deep groove pattern formed in the face of the rotating seal ring. The groove pattern has two sets of angled grooves, which are angled in opposite rotational directions to provide pumping of barrier gas into the grooves.

EP154338 describes a sliding element for seals in order to reduce the friction coefficient on the sliding face during rotational motion. The sliding element comprises a first dam section, which is configured in an annular form on the sliding face. The element further has dimple sections which have a narrow groove that points towards the sealed fluid. These dimple sections are arranged in an annular array. There is then another dimple section which has a narrow groove point in an opposite direction compared with the first dimple sections, which is also arranged in an annular array.

US2015/0123350 describes a dynamic sealing assembly where a liquid film is present between the sealing faces. The sealing face of one of a pair of parts has extremely shallow grooves and then deep fluid-introduction grooves for introducing a higher-pressure fluid are provided on the upstream side of the extremely shallow grooves.

EP 3,252,354 describes a negative pressure mechanism that generates negative pressure by relative rotational sliding of a stationary-side seal ring and a rotating-side seal ring, which contains a fluid between the sealing faces to reduce friction. In some embodiments, the negative pressure generation mechanism includes a dimple formed in the seal face.

US2004/0256809 describes a hydrodynamic sealing assembly. The face of the face seal provides a sealing zone for maintaining a lubricant layer of about 2 micrometers between the face seal and the sleeve. A face of the seal contains annular and radial oil passages which distributes oil to the surface of the seal face.

US 3,804,424 describes a rotary mechanical seal, which reduces distortions in the sealing washer caused by thermal expansion of the washer or by a change in pressure profile across the sealing face of the washer. This is achieved by providing shallow spiral grooves formed in one of the opposing faces of the seal, which are directed to produce a pressure across the face.

### SUMMARY

The present disclosure relates generally to rotary mechanical seals for fluid, and more particularly, devices, systems, and methods for reducing friction between seal faces forming a seal interface.

According to one embodiment, the a hydrostatic seal assembly is disclosed. The seal assembly includes: a first ring having a first side bounded by a first edge and a second edge; and second ring having a second side facing the first side. In this embodiment, a circumferential channel extends along the first side between, and spaced from, the first edge and the second edge, a plurality of sub-channels extend from the circumferential channel along the first side of the first ring and the circumferential channel and the plurality of sub-channels are configured to take up less than ten percent of a surface area of the first side, and the first ring and the second ring form a seal between the first side and the second side.

In the seal assembly of any prior embodiment, the plurality of sub-channels include a plurality of first sub-channels extending from the circumferential channel to the first edge along the first side of the first ring.

In the seal assembly of any prior embodiment, the circumferential channel and the plurality of first sub-channels promote introducing fluid between the first side of the first ring and the second side of the second ring causing hydrostatic lift between the first side of the first ring and the second side of the second ring.

In the seal assembly of any prior embodiment, wherein the plurality of sub-channels include a plurality of second sub-channels extending along the first side from the circumferential channel toward the second edge.

In the seal assembly of any prior embodiment, the plurality of sub-channels extending from the circumferential channel are located on the first side of the first ring such that first sub-channels of the plurality of first sub-channels and second sub-channels of the plurality of second sub-channels extend from the circumferential channel in an alternating order along a length of the circumferential channel.

In the seal assembly of any prior embodiment, a second sub-channel of the plurality of second sub-channels extends from the circumferential channel to a terminal end spaced from the second edge.

In the seal assembly of any prior embodiment, a ratio of a circumferential distance between each first sub-channel of the plurality of first sub-channels to a radial span of each first sub-channel is about 8.

In the seal assembly of any prior embodiment, the first edge of the first ring is configured to be on a pressurized side of the seal.

In the seal assembly of any prior embodiment, the seal is configured to provide a seal against pressures on the pressurized side of the seal within a range of about 41.4 bar (600 psi) to about 68.9 bar (1000 psi).

In the seal assembly of any prior embodiment, a ratio of a circumferential distance between each sub-channel of the plurality of sub-channels to a radial span of each sub-channel is about 4.

In the seal assembly of any prior embodiment, the circumferential channel is co-axial with one or both of the first edge and the second edge.

In the seal assembly of any prior embodiment, the first side of the first ring has a width extending from the first edge to the second edge and the circumferential channel is spaced from the first edge by a distance of one-third of the width of the first side of the first ring.

In the seal assembly of any prior embodiment, the circumferential channel a depth of about 0.051 mm (0.002 inches).

In the seal assembly of any prior embodiment, the circumferential channel has a width between about 0.0025 mm (0.001 inches) and 0.152 mm (0.006 inches).

In the seal assembly of any prior embodiment, one or both of the first side of the first ring and the second side of the second ring are formed from one or more materials selected from a group consisting of carbon, silicon carbide, and tungsten carbide.

In the seal assembly of any prior embodiment, the circumferential channel includes a first circumferential channel portion and a second circumferential channel portion fluidly separated from the first circumferential channel portion.

Also disclosed is a liquid seal system configured to provide a seal between a housing defining a bore with pressurized fluid therein and a rotatable shaft extending through the bore. The seal system includes: a first annular ring having a first seal face; and a second annular ring having a second seal face facing the first seal face. An annular channel extends along the first seal face and a plurality of radial channels extend from the annular channel along the first seal face. The plurality of radial channels being fluidly connected via the annular channel. The first seal face and the second seal face interact via fluid received in the annular channel to form a hydrostatic seal.

In the seal system of any prior embodiment, a first set of the plurality of radial channels extend from the annular channel to a first edge of the first seal face.

In the seal system of any prior embodiment, a second set of the plurality of radial channels extend from the annular channel to a terminal end spaced from a second edge of the first seal face.

In the seal system of any prior embodiment, the first edge of the first seal face is an inner edge of the first annular ring and the second edge of the first seal face is an outer edge of the first annular ring.

In the seal system of any prior embodiment, the first edge of the first seal face is an outer edge of the first annular ring and the second edge of the first seal face is an inner edge of the first annular ring.

In the seal system of any prior embodiment, the first edge of the first seal face is on a higher pressure side of the hydrostatic seal than the second edge of the first seal face.

In the seal system of any prior embodiment, each radial channel of the first set of the plurality of radial channels extends a radial channel distance from the annular channel and each radial channel of the second set of the plurality of radial channels extends the radial channel distance from the annular channel.

In the seal system of any prior embodiment, the first annular ring is formed from a plurality of components.

In the seal system of any prior embodiment, the first seal face and the second seal face are formed from silicon carbide.

In the seal system of any prior embodiment, the annular channel and the plurality of radial channels promote introducing fluid between the first seal face and the second seal face to cause hydrostatic lift between the first seal face and the second seal face.

In the seal system of any prior embodiment, the annular channel and the plurality of radial channels form a continuous passageway for pressurized fluid from within the bore of the housing.

It shall be understood that any prior disclosed seal assembly can be included in a seal system.

Also disclosed is a method of forming an annular ring for a hydrostatic sealing assembly. The method includes: forming a circumferential channel in a surface of an annular ring; and forming a plurality of first radial channels in the surface of the annular ring, the plurality of first radial channels extending from the circumferential channel to a first edge of the surface. The circumferential channel fluidly connects the plurality of first radial channels in the surface of the annular ring and the circumferential channel and the plurality of first radial channels are configured to take up less than ten percent of a surface area of the surface of the annular ring.

In the method of any prior embodiment, the method can further include forming a plurality of second radial channels in the surface of the annular ring, the plurality of second radial channels extending from the circumferential channel toward a second edge of the surface. The circumferential channel can fluidly connect the plurality of first radial channels in the surface of the annular ring and the plurality of second radial channels in the surface of the annular ring.

In the method of any prior embodiment, the formed circumferential channel, the plurality of first radial channels, and the plurality of second radial channels take up less than five percent of a surface area of the surface of the annular ring.

In the method of any prior embodiment, the formed circumferential channel, the plurality of first radial channels, and the plurality of second radial channels are formed via laser engraving.

In the method of any prior embodiment, the circumferential channel and the plurality of first radial channels have a depth of about 0.051 mm (0.002 inches).

In the method of any prior embodiment, the circumferential channel and the plurality of first radial channels have a width within a range of about 0.025 mm (0.001 inches) to about 0.152 mm (0.006 inches).

The preceding summary is provided to facilitate an understanding of some of the innovative features unique to the present disclosure and is not intended to be a full description. A full appreciation of the disclosure can be gained by taking the entire specification, claims, drawings, and abstract as a whole.

### BRIEF DESCRIPTION OF THE DRAWINGS

The disclosure may be more completely understood in consideration of the following description of various illustrative embodiments in connection with the accompanying drawings, in which:
Figure 1 is a schematic sectional view depicting a portion of an illustrative seal assembly of the present disclosure between a housing and a rotating shaft;
Figure 2 is a schematic plan view of an illustrative ring of a seal assembly having a seal face configuration with channels;
Figure 3 is a schematic plan view of an illustrative ring of a seal assembly having a seal face configuration with channels;
Figure 4 is a schematic magnified plan view of a portion of the illustrative ring of Figure 2 that is within circle-4;
Figure 5 is a schematic cross-section view of the illustrative ring of Figure 4 taken along line 5-5;
Figure 6 is a schematic cross-section view of the illustrative ring of Figure 4 taken along line 6-6; and
Figure 7 is a schematic cross-section view of the illustrative ring of Figure 7 taken along line 7-7.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described. On the contrary, the intention is to cover all modifications, equivalents, and alternatives falling within the spirit and scope of the disclosure.

### DETAILED DESCRIPTION

For the following defined terms, these definitions shall be applied, unless a different definition is given in the claims or elsewhere in this specification.

All numeric values are herein assumed to be modified by the term "about", whether or not explicitly indicated. The term "about" generally refers to a range of numbers that one of skill in the art would consider equivalent to the recited value (e.g., having the same function or result). In many instances, the term "about" may include numbers that are rounded to the nearest significant figure.

The recitation of numerical ranges by endpoints includes all numbers within that range (e.g. 1 to 5 includes 1, 1.5, 2, 2.75, 3, 3.80, 4, and 5).

The term "diameter", as used in this specification and the appended claims, is generally employed in its sense as being a line passing from side to side of an object unless the content clearly dictates otherwise. In some cases, the diameter of an object may pass through a center of the object and/or may be a longest line passing from side to side of the object.

As used in this specification and the appended claims, the singular forms "a", "an", and "the" include plural referents unless the content clearly dictates otherwise. As used in this specification and the appended claims, and although the term "and/or" is sometimes expressly recited herein, the term "or" is generally employed in its sense including "and/or" unless the content clearly dictates otherwise.

It is noted that references in the specification to "an embodiment", "some embodiments", "other embodiments", etc., indicate that the embodiment described may include one or more particular features, structures, and/or characteristics. However, such recitations do not necessarily mean that all embodiments include the particular features, structures, and/or characteristics. Additionally, when particular features, structures, and/or characteristics are described in connection with one embodiment, it should be understood that such features, structures, and/or characteristics may also be used in connection with other embodiments whether or not explicitly described unless clearly stated to the contrary.

The following detailed description should be read with reference to the drawings in which similar elements in different drawings are numbered the same. The drawings, which are not necessarily to scale, depict illustrative embodiments and are not intended to limit the scope of the invention.

Mechanical seals may take on a variety of configurations. In pumps, mixers, agitators, and/or other systems utilizing a rotating shaft or portion, rotary mechanical end face seals may be utilized to facilitate a fluid tight seal between a housing and a rotating shaft. Such end face seals may include an axially-stationary annular ring (e.g., a mating ring) associated with the housing or the rotating shaft and an axially-adjustable annular ring (e.g., a primary ring) associated with the other of the housing or the rotating shaft. The axially-stationary ring and the axially-adjustable ring may include seal faces in a relatively rotating sealing relation to one another along a seal interface.

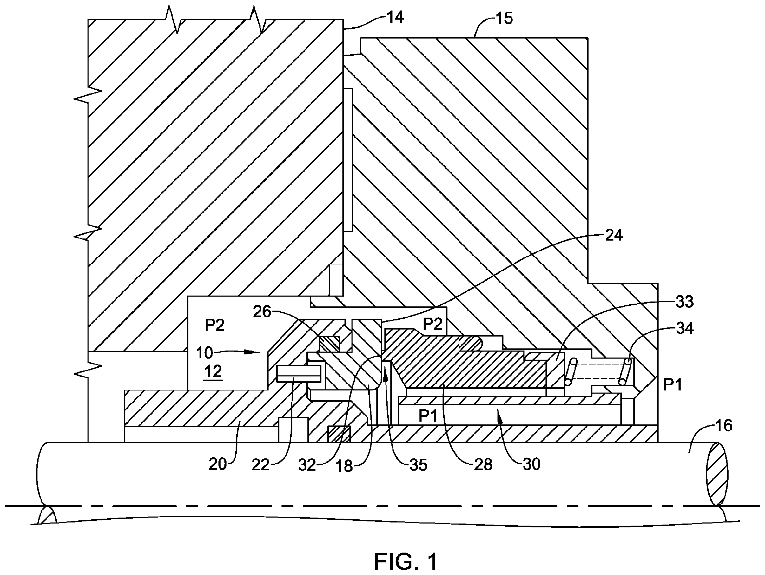

Figure 1 depicts an illustrative seal arrangement in a seal assembly 10 (e.g., a rotary end face seal assembly) with process pressure or high pressure at an outer edge of the seal faces and ambient or low pressure (e.g., lower pressure than the process pressure or high pressure) at the inner edge of the seal faces. It is contemplated, however, that the processor pressure or high pressure may be at an inner edge of the seal faces and ambient or low pressure may be at an outer edge of the seal faces. The seal arrangement depicted in Figure 1 may be configured to seal fluid, such as a liquid and/or a gas. Although the seal assembly 10 and configurations discussed herein may be primarily discussed with respect to sealing a process fluid that is a liquid (e.g., such that the seal assembly 10 is a liquid seal assembly or system), it is contemplated the seal assembly 10 and configurations may be utilized to seal a process fluid that is a gas (e.g., such that the seal assembly 10 is a gas seal assembly or system).

The seal assembly 10 depicted in Figure 1 may seal fluid within a chamber 12 defined by a housing 14 and an attached gland plate 15. A shaft 16 may extend through the housing 14. In some cases, the shaft 16 may be configured to rotate relative to the housing 14 and a seal may be provided to inhibit or mitigate leakage of fluid from the chamber where the shaft 16 and the housing 14 meet.

The seal assembly 10 may include, among other components, a seal ring configuration including a primary ring 28 (e.g., a first ring or first annular ring) and a mating ring 18 (e.g., a second ring or second annular ring). As depicted in Figure 1, the mating ring 18 may be configured to rotate with the shaft 16 and the primary ring 28 may be axially adjustable and rotationally fixed relative to the mating ring 18. The mating ring 18 and the primary ring 28, however, may be configured in different relative configurations including, but not limited to, the primary ring 28 rotating with the shaft 16 and the mating ring 18 remaining rotationally fixed relative to the primary ring 28.

As depicted in Figure 1, the mating ring 18 may be rotationally fixed relative to a sleeve 20 by one or more pins 22. The sleeve 20 may be mounted on the shaft 16 and may rotate with the shaft 16 causing the mating ring 18 to also rotate with the shaft 16. An o-ring 26 may seal the mating ring 18 to the sleeve 20 to prevent leakage of a process fluid through the mating ring 18-sleeve 20 connection. The mating ring 18 may include a mating ring seal face 24 (e.g., an annular seal face or seal face taking on one or more other suitable configurations) defined by a first edge or outer edge and a second edge or inner edge. Further, mating ring 18 may be configured from a single component or two or more separable components connectable to form an annular ring.

The primary ring 28 may be retained within a gland adaptor assembly 30, as depicted in Figure 1. The primary ring 28 may include a primary ring seal face 32 (e.g., an annular seal face or seal face taking on one or more other suitable configurations) defined by a first edge or an outer edge and a second edge or an inner edge. The primary ring seal face 32 may be configured to interact with the mating ring seal face 24 to form a seal interface 35 of the seal assembly 10. Further, the primary ring 28 may be configured from a single component or two or more separable components connectable to form an annular ring.

The primary ring 28 may be axially biased by a biasing mechanism 34 (e.g., a spring or other suitable biasing mechanism). The biasing mechanism 34 may bias the primary ring 28 toward the mating ring 18, urging the primary ring seal face 32 into face-to-face sealing relation with the mating ring seal face to form the seal interface 35. In some cases, a disk 33 may be situated axially between the biasing mechanism 34 and the primary ring 28.

The seal assembly 10, the housing 14, and the gland plate 15, and/or other suitable components may define a pressure zone P₂ (e.g., a pressure zone or process zone) in the chamber 12 upstream of the seal interface 35. A low pressure zone P₁ may exist downstream of the seal interface 35. The sealing configuration depicted in Figure 1 may be referred to as an outside diameter (O.D.) pressurized seal assembly 10, where the pressurized process fluid is adjacent an outer diameter of the seal interface 35.

The seal interface 35 along the primary ring seal face 32 and the mating ring seal face 24 may inhibit process fluid from escaping the high pressure zone P₂ to the low pressure zone P₁. Because, in the configuration depicted in Figure 1, the mating ring seal face 24 is wider in a radial direction than the primary ring seal face 32, the seal interface 35 may be coextensive with the radial extent of the primary ring seal face 32. In alternative configurations, the seal interface 35 may be defined by the mating ring seal face 24 operating against a primary ring seal face 32 of greater radial width than a radial width of the mating ring seal face 24.

In some cases, the seal interface may be lubricated via fluid (e.g., a process fluid of liquid and/or gas) under pressure within the housing, where the fluid is introduced to the seal interface via a hydrodynamic effect and/or a hydrostatic effect. To facilitate introducing process fluid to a seal interface with a hydrodynamic effect, one or more seal faces of the seal interface may include surface texturing that promotes introduction of process fluid into the seal interface while a rotating portion of the seal interface is rotating. Such surface texturing may include applying hydro-pad relieved areas or depressions on one or both of the seal faces forming the seal interface. One example of seal faces including hydro-pad relieved areas or depressions is disclosed in U.S. Patent No. 4,407,512, which is hereby incorporated by references in its entirety for all purposes. Another example of seal faces including hydro-pad relieved areas or depressions is disclosed in U.S. Patent Application Serial No. 14/875,098 and published as US 2016/0097456 A1, which is hereby incorporated by references in its entirety for all purposes.

Other surface texturing techniques to promote lubrication between seal faces include micro-dimple surface texturing. Typical micro-dimples had a diameter of about 0.102 mm (0.004 inches) and a dimple depth of about 0.051 mm (0.0002 inches), which results in a dimple size to depth ratio on the order of about twenty (20). In some cases, a dimple area density on a seal face of a seal assembly of about twenty percent has been utilized.

Although the hydrodynamic effect and known surface texturing may be relied upon to lubricate the seal interface of a seal assembly during rotation of a rotating portion of the seal, it has been found that better lubrication may be desirable at static pressure conditions and upon startup of the rotating portion of the seal assembly (e.g., a portion configured to rotate with a rotating shaft of a pump) to minimize or mitigate seal face damage. Ensuring adequate lubrication upon startup of rotation of a rotating portion of a seal may be of particular concern where process fluid is kept under high pressures and/or where process fluid has a particular chemical make-up as hard materials that can withstand high pressures without deformation and/or that resist chemical corrosion may be utilized for the seal faces forming the seal interface.

Example materials utilized for the seal faces forming the seal interface include, but are not limited to, carbon (C), silicon carbide (SiC), tungsten carbide (WC), and the like. Hard materials utilized for the seal faces forming the seal interface may include SiC, WC, and the like.

Running hard material against hard material at a seal interface may cause wear and tear on the seal faces and limit a life of a seal assembly. Although the seal assembly may be configured such that one of the seal faces formed from the hard material may include a matte finish and the other seal face may have a plain polish finish to facilitate introducing process fluid into a seal interface due to hydrostatic effects, such a matte finish may decrease some hydrodynamic load support capability of the plain polish finish due to a larger gap between the matte finish face and the plain polish finish face Additionally, although hydro-pad face patterning or texturing may be utilized to assist in promoting the introduction of process fluid into the seal interface during rotation of the seal assembly, the applicant has appreciated that such a configuration may increase leakage without adequately encouraging lubrication at the seal interface in static pressure situations (e.g., upon startup, etc.). It has been found, however, that applying channels (e.g., micro-channel surface texturing patterns), as discussed herein, to one or both of the seal faces forming the seal interface may increase process fluid penetration into the seal interface, particularly at pump start up and/or static pressurized conditions, to separate the seal faces with lower leakage relative to leakage expected when utilizing hydro-pad patterning.

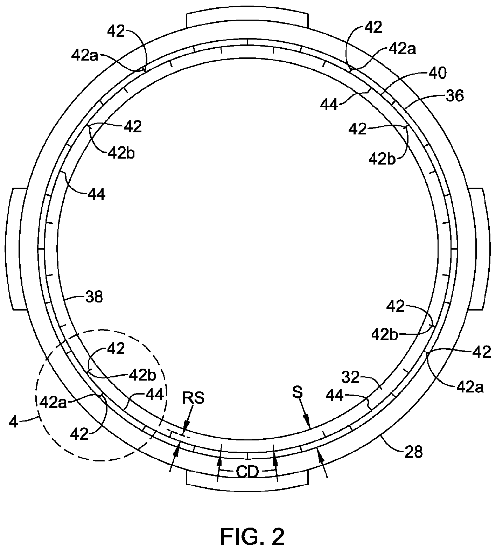

Figures 2-7 depict configurations of the primary ring seal face 32 configured to promote the introduction of process fluid between the primary ring seal face 32 and the mating ring seal face 24. Although the seal face configurations depicted in Figures 2-7 are discussed herein with respect to the primary ring 28, such configurations may be utilized additionally or alternatively on the mating ring seal face 24.

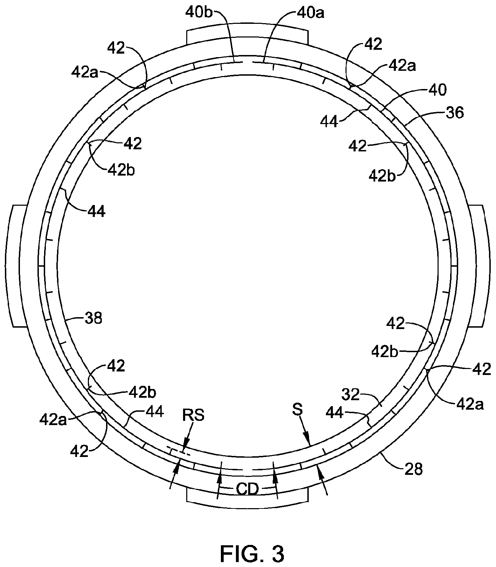

Figures 2 and 3 depict plan views of the primary ring 28 showing the primary ring seal face 32 defined by a first edge 36 (e.g., a radially outer edge or periphery) and a second edge 38 (e.g., a radially inner edge or periphery) of the primary ring 28. Although the first edge 36 is depicted and described herein as the outer edge and the second edge 38 is depicted and described herein as the inner edge, it is contemplated that the first edge 36 may be an inner edge and the second edge 38 may be an outer edge. The primary ring seal face 32 defines one or more channels that are configured to promote introducing process fluid between seal faces of a seal interface via a hydrostatic effect.

In the configuration depicted in Figure 2, the first edge 36 may be configured to be exposed to the process fluid and associated pressures. The seal face configurations discussed herein may be configured to be utilized in seal assemblies 10 that are used to maintain a fluid under pressure. For example, the seal face configuration may be configured to facilitate lubrication within a seal interface when the fluid under pressure is held within a range from about 6.9 bar (100 pounds per square inch (psi)) or less to about 137.9 bar (2000 psi or more), or other suitable range. In one example, the seal face configuration may be configured to facilitate lubrication within a seal interface when the fluid under pressure is held within a range from about 41.4 bar (600 psi) to about 68.9 bar (1000 psi).

The channels depicted in the primary ring seal face 32 of Figure 2 may include one or more circumferential channels 40 (e.g., when there are two or more circumferential channels 40, the circumferential channels 40 may be co-axial and/or take on one or more other suitable configurations) and a plurality of sub-channels 42 (e.g., radial channels or other channels radially extending from the circumferential channel 40). In some cases, the plurality of sub-channels 42 may extend from the circumferential channel 40 such that the circumferential channel 40 and at least some of the plurality of sub-channels 42 may be fluidly connected and/or may form a continuous passageway. Such a configuration of channels may facilitate directing fluid into the seal interface of the seal assembly 10, distributing the fluid along the circumference of the seal interface, and increase a fluid opening force between the seal faces (e.g., the primary ring seal face 32 and the mating ring seal face 24) to reduce mechanical loads on the seal faces and improve seal performance.

The channels (e.g., the circumferential channel 40 and the sub-channels 42) are configured to take up a desired percentage of a surface area of the primary ring seal face 32 such that a leakage of process fluid may be mitigated. The channels are configured to take up less than ten (10) percent. For example, the channels may be configured to take up less than about five (5) percent, and/or other suitable amount of a surface area of the primary ring seal face 32. In one example, the channels may be configured to take up about three (3) percent of a surface area of the primary ring seal face 32.

The circumferential channel 40 may have an annular configuration (e.g., an annular channel having a single, continuous circumferential channel segment or portion forming a ring on or in the primary ring seal face, as depicted in Figure 2) or the circumferential channel 40 may be formed from a plurality of circumferential channel segments or portions spaced from one another (e.g., as depicted in Figure 3). When the circumferential channel 40 is formed from a plurality of circumferential channel segments or portions, the circumferential channel 40 may include two (2) circumferential channel segments (e.g., circumferential channel segments or portions 40a, 40b depicted in Figure 3), three (3) circumferential channel segments or portions, four (4) circumferential channel segments or portions, or other suitable number of circumferential channel segments or portions. In some cases, each of the plurality of circumferential channel segments or portions may be located a same distance from a central axis of the primary ring 28.

The circumferential channel 40 may take on a suitable configuration for distributing fluid along the primary ring seal face 32. Example configurations may include, but are not limited to a circular configuration, an oval configuration, a star configuration, and/or other suitable configurations, as desired. In one example, the circumferential channel 40 may be generally circular and may be co-axial with one or both of the first edge 36 and the second edge 38 of the primary ring 28.

The circumferential channel 40 may be positioned at any location between the first edge 36 and the second edge 38 of the primary ring. In some cases, the circumferential channel 40 may be spaced from the first edge 36 and the second edge 38. For example, the primary ring seal face 32 may have seal face width S between the first edge 36 and the second edge 38, and the circumferential channel 40 (e.g., a center of the circumferential channel 40) may be located within a range of one-fourth to one-half of a distance of the seal face width S, or other suitable range, from the first edge 36 or otherwise an edge configured to be adjacent process fluid. In one example, the circumferential channel 40 may be located at one-third of a distance of the seal face width S from the first edge 36, as depicted in Figures 2 and 3.

The plurality of sub-channels 42 may include a plurality of first sub-channels 42a and a plurality of second sub-channels 42b. Alternatively, the plurality of sub-channels 42 may consist solely of a plurality of first sub-channels 42a.

The plurality of first sub-channels 42a may extend from the circumferential channel 40 to the first edge 36 defining the primary ring seal face 32. Such a configuration may facilitate promoting process fluid into the seal interface 35 as the plurality of first sub-channels in communication with the circumferential channel provide an avenue for pressurized process fluid to enter seal interface 35, circulate around the seal interface 35 via the circumferential channel 40 and hydrostatic effect, and cause hydrostatic lift between the primary ring seal face 32 and the mating ring seal face 24 when in use in a manner similar to the configuration depicted in Figure 1. Such a configuration may form a hydrostatic seal between the primary ring seal face 32 and the mating ring seal face 24 at hydrostatic conditions, where a hydrostatic seal is known as a non-contacting mechanical seal that separates two different pressure zones used to establish a balanced pressure zone between two adjacent seal faces.

The plurality of second sub-channels 42b may extend from the circumferential channel 40 toward the second edge 38 defining the primary ring seal face 32. Such a configuration may facilitate process fluid promoting hydrostatic lift between the primary ring seal face 32 and the mating ring seal face 24 by providing an avenue for the process fluid to penetrate deeper into the seal interface 35 than a location of the circumferential channel 40. In some cases, one or more of the plurality of second sub-channels 42b may have a terminal end 44 prior to reaching the second edge 38 such that process fluid may be used to lubricate the seal interface 35 while mitigating leakage of process fluid through the seal interface 35.

The plurality of second sub-channels 42b may extend a distance from the circumferential channel 40 toward the second edge 38. The distance each of the second sub-channels 42b extend may be similar or the same for all of the second sub-channels 42b or one or more of the second sub-channels 42b may extend a distance from the circumferential channel 40 toward the second edge 38 that is different than a distance at least one other of the second sub-channels 42b may extend. In some cases, the second sub-channels 42b may extend a distance within a range of one-fourth to one-half of a distance of the seal face width S or other suitable range. In one example, one or more of the plurality of second sub-channels 42b may extend a distance of one-third of a distance of the seal face width S, as depicted in Figures 2 and 3.

When both are included in the configuration of the primary ring seal face 32, the plurality of first sub-channels 42a and the plurality of second sub-channels 42b may be configured in a suitable manner with respect to one another. For example, the first sub-channels 42a of the plurality of the first sub-channels 42a may extend from the circumferential channel 40 at a same location as one of the plurality of second sub-channels 42b, the first sub-channels 42a of the plurality of the first sub-channels 42 and the second sub-channels 42b may extend from the circumferential channel 40 in an alternating or staggered order along a length of the circumferential channel 40 (e.g., as depicted in Figures 2 and 3), and/or the plurality of first sub-channels 42a may be configured on the primary ring seal face 32 in one or more other suitable manners with respect to how the plurality of second sub-channels 42b are configured on the primary ring seal face 32.

The sub-channels 42 may be spaced a suitable distance from each other along the circumferential channel 40. In some cases, the sub-channels 42 may be spaced a consistent distance from one another along the length of the circumferential channel, but this is not required. In one example, an angular separation between a same type of sub-channels 42 (e.g., between two first sub-channels 42a or between two second sub-channels 42b) may be within a range from about ten (10) degrees to about thirty (30) degrees or other suitable range. Alternatively or in addition, a distance between sub-channels 42 may be based on a ratio of a circumferential distance CD between the same type of sub-channels 42 to a radial span RS of a sub-channel 42 (e.g., a distance from a center of the circumferential channel 40 to a terminal end of the first sub-channel 42a or the second sub-channel 42b). The ratio of a circumferential distance CD between the same type of sub-channels 42 to a radial span RS of a sub-channel 42 may be within a range from about four (4) to about twenty (20) or other suitable range. In one example, the sub-channels 42 of a same type of sub-channel may be spaced along a length of the circumferential channel 40 such that the ratio of circumferential distance CD between the same type of sub-channels 42 to a radial span RS of the same type of sub-channel 42 may be about or may be eight (8) or less to facilitate promoting hydrostatic lift at the seal interface 35 while mitigating leakage of process fluid through the seal interface 35. Alternatively or in addition, when the first sub-channels 42a and the second sub-channels 42b are consistently or equally staggered along the length of the circumferential channel 40, a ratio of the circumferential distance between any two adjacent sub-channels 42 to a radial span of a sub-channel may be or may be about four (4) to facilitate promoting hydrostatic lift at the seal interface 35 while mitigating leakage of process fluid through the seal interface 35. Other ratio values may be utilized, as desired, to determine a number of sub-channels to utilize and/or a spacing between adjacent sub-channels 42.

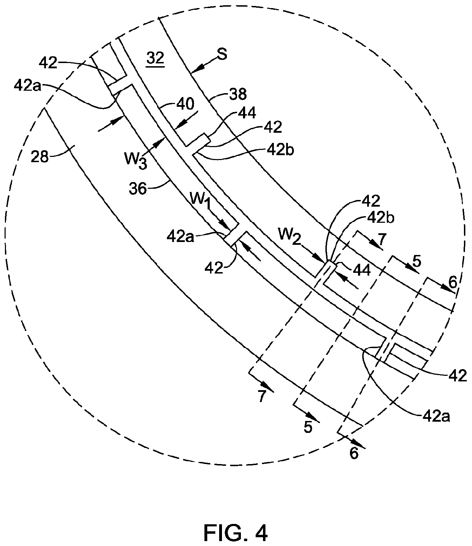

Figure 4 is a magnification of a portion of the illustrative primary ring 28 in Figure 2 that is within circle-4. As can be seen in Figure 4, the first sub-channels 42a have a width W₁, the second sub-channels 42b have a width W₂, and the circumferential channel 40 has a width W₃. In some cases, the widths W₁, W₂, W₃ may be the same, however, it is contemplated that one or more channels may have a width that may be different than a width of at least one other channel. In some cases, the widths W₁, W₂, W₃ may be configured to facilitate a flow of process fluid through the channels. The widths W₁, W₂, W₃ may be within a suitable rage of widths, such as within a range extending from about 0.025 mm (0.001 inches) to about 0.152 mm (0.006 inches) or other suitable range. In one example, the widths W₁, W₂, W₃ may be about 0.127 mm (0.005 inches).

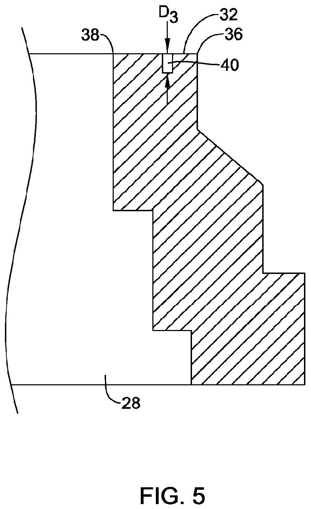

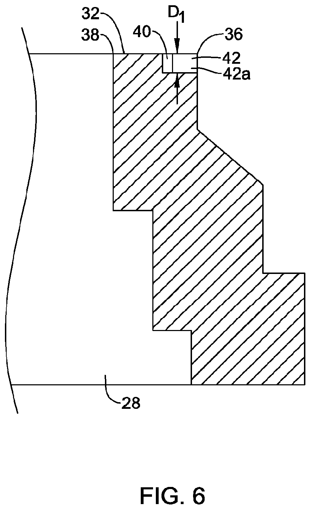

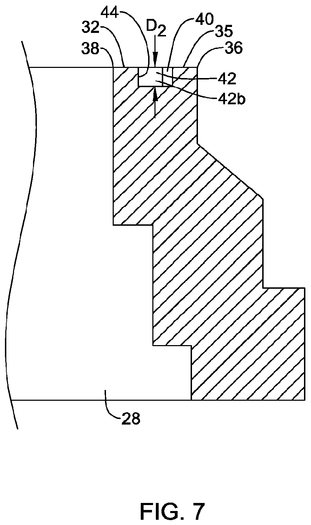

Figures 5-7 depict cross-sections of the primary ring 28 taken along lines 5-5, 6-6, and 7-7, respectively, of Figure 4. In the cross-section of Figure 5, the circumferential channel 40 is depicted in the primary ring seal face 32 as having a depth D₃. In the cross-section of Figure 6, the first sub-channel 42a is depicted as extending from the circumferential channel 40 to the first edge 36 of the primary ring 28, where the first sub-channel 42a is depicted in the primary ring seal face 32 as having a depth D₁. In the cross-section of Figure 7, the second sub-channel 42b is depicted as extending from the circumferential channel 40 to its terminal end 44, where the second sub-channel 42b is depicted in the primary ring seal face 32 as having a depth D₂.

The depths D₁, D₂, D₃ of the channels may be equal to one another or, alternatively, one or more of the depths D₁, D₂, D₃ may be different from another one of the depths D₁, D₂, D₃. In some cases, the depths D₁, D₂, D₃ may be configured to facilitate hydrostatic lift at the seal interface 35 by promoting the introduction of process fluid into the channels (e.g., the circumferential channel 40 and/or the sub-channels 42). Illustratively, the depths may be within a range of 0.025 mm (0.001 inches) and 0.127 mm (0.005 inches) or other suitable range. In one example, the depths D₁, D₂, D₃ may be equal to about 0.051 mm (0.002 inches), which is an order of magnitude deeper than depths of about 0.051 mm (0.0002 inches) used for dimple surface texturing. Channels of such depth may facilitate serving as a reservoir for fluid (e.g., in the event of a loss of pressurized fluid) and/or for collecting wear debris from the seal faces (e.g., the primary ring seal face 32 and/or the mating ring seal face 24), if there is any, which may facilitate prolonging a life of the seal assembly 10.

The above described channels of the primary ring 28 may be formed in the primary ring 28 (or the mating ring 18) in a suitable manner capable of forming channels in hard materials (e.g., silicon carbide, tungsten carbide, etc.). In some cases, a laser (e.g., via laser engraving or ablating and/or other laser engraving or ablating techniques) or other suitable machining application may be utilized to form the circumferential channel 40 and/or the sub-channels 42 (e.g., the first sub-channels 42a and/or the second sub-channels 42b) in a surface of the primary ring seal face 32 of the primary ring 28 and/or a surface of the seal face 24 of the mating ring 18, such that the formed circumferential channel 40 and the formed sub-channels 42 are fluidly connected (e.g., in some cases, the fluidly connected formed circumferential channel 40 and formed sub-channels 42 may form a continuous passageway to facilitate pressurized process fluid traveling around the seal interface 35). A laser or other suitable machining application may be particularly configured to form the channels to the depths and widths described herein that promote introducing pressurized process fluid into the seal interface 35 while mitigating leakage of the process fluid all of the way through the seal interface 35.

As discussed above, channels of seal faces in the seal assembly 10 may be configured in a variety of manners to facilitate improved lift (e.g., hydrostatic lift) between seal faces of a seal interface and reduce wear and tear on the seal faces. Below is an example non-limiting seal configuration of a seal face incorporating the above-discussed illustrative concepts.

In an example, a four (4) inch outer diameter seal assembly with a seventy (70) percent balance ratio and utilizing SiC as the material for the primary ring seal face and the mating ring seal face may include a circumferential channel and a plurality of sub-channels on the primary ring seal face. The circumferential channel and the sub-channels had a depth of about 0.051 mm (0.002 inches) and a width of about 0.127 mm (0.005 inches). The circumferential channel may be annular and located about one-third a width of the primary ring seal face from an outer diameter of the primary ring seal face, first sub-channels of the plurality of sub-channels may extend from the circumferential channel to the outer diameter circumference of the seal face, and second sub-channels of the plurality of sub-channels may extend from the circumferential channel toward an inner diameter circumference of the seal face about one-third the width of the primary ring seal face. The first sub-channels and the second sub-channels may be staggered equal distances away from one another. The sub-channels of a same type of sub-channel may be spaced along a length of the circumferential channel such that the ratio of circumferential distance between the same type of sub-channels to a radial span of the same type of sub-channel is about eight (8). Such a configured seal face assembly was tested for 100 hours in a pump holding water at 27 °C (80 degrees Fahrenheit), the water having a maximum fluid pressure of 68.9 bar (1000 psi), and the pump having a shaft rotation of 3600 rotations per minute. Post-test examination of the seal assembly revealed little wear, while leakage remained low (i.e., a leakage rate of 0-6 grams/hour) and/or within tolerances.

It should be understood that this disclosure is, in many respects, only illustrative. The various individual elements discussed above may be arranged or configured in any combination thereof without exceeding the scope of the disclosure. Changes may be made in details, particularly in matters of shape, size, and arrangement of steps without exceeding the scope of the disclosure. The disclosure's scope is, of course, defined in the language in which the appended claims are expressed.

## Claims

1. A hydrostatic seal assembly (10) for sealing a liquid comprising:
a first ring (28) having a first side (32) bounded by a first edge (36) and a second edge (38); and
a second ring (18) having a second side (24) facing the first side;
wherein a circumferential channel (40) extends along the first side (32) between, and spaced from, the first edge (36) and the second edge (38);
wherein a plurality of sub-channels (42) extend from the circumferential channel (40) along the first side (32) of the first ring (28);
wherein the first ring (28) and the second ring (18) form a hydrostatic seal between the first side (32) and the second side (24),
**characterized in that** the circumferential channel (40) and the plurality of sub-channels (42) are configured to take up less than ten percent of a surface area of the first side (32).

2. The seal assembly (10) of claim 1, wherein the plurality of sub-channels (42) include a plurality of first sub-channels (42a) extending from the circumferential channel (40) to the first edge (36) along the first side (32) of the first ring (28), and
wherein the circumferential channel (40) and the plurality of first sub-channels (42a) promote introducing fluid between the first side (32) of the first ring (28) and the second side (24) of the second ring (18) causing hydrostatic lift between the first side (32) of the first ring (28) and the second side (24) of the second ring (18).

3. The seal assembly (10) of claim 2, wherein the plurality of sub-channels (42) include a plurality of second sub-channels (42b) extending along the first side (32) from the circumferential channel (40) toward the second edge (38), and
wherein the plurality of sub-channels (42) extending from the circumferential channel (40) are located on the first side (32) of the first ring (28) such that first sub-channels of the plurality of first sub-channels (42a) and second sub-channels of the plurality of second sub-channels (42b) extend from the circumferential channel (40) in an alternating order along a length of the circumferential channel.

4. The seal assembly (10) of claim 2, wherein a second sub-channel of the plurality of second sub-channels (42b) extends from the circumferential channel (40) to a terminal end (44) spaced from the second edge (38).

5. The seal assembly (10) of claim 2, wherein a ratio of a circumferential distance between each first sub-channel of the plurality of first sub-channels (42a) to a radial span of each first sub-channel is about 8 and, optionally, is about 4.

6. The seal assembly (10) of claim 2, wherein the first edge (36) of the first ring (28) is configured to be on a pressurized side of the seal and the seal is configured to provide a seal against pressures on the pressurized side of the seal within a range of about 41.4 bar (600 psi) to about 68.9 bar (1000 psi).

7. The seal assembly (10) of claim 1, wherein the circumferential channel (40) is co-axial with one or both of the first edge (36) and the second edge (38) and includes a first circumferential channel portion (40a) and a second circumferential channel portion (40b) fluidly separated from the first circumferential channel portion.

8. The seal assembly (10) of claim 1, wherein the first side (32) of the first ring (28) has a width extending from the first edge (36) to the second edge (38) and the circumferential channel (40) is spaced from the first edge (36) by a distance of one-third of the width of the first side (32) of the first ring (28).

9. The seal assembly (10) of claim 1, wherein the circumferential channel (40) has a depth of about 0.051mm (0.002 inches).

10. The seal assembly (10) of claim 1, wherein the circumferential channel (40) has a width between about 0.025mm (0.001 inches) and 0.152mm (0.006 inches).

11. The seal assembly (10) of claim 1, wherein one or both of the first side (32) of the first ring (28) and the second side (24) of the second ring (18) are formed from one or more materials selected from a group consisting of carbon, silicon carbide, and tungsten carbide.

12. A method of forming an annular ring for a hydrostatic seal assembly (10), the method comprising:
forming a circumferential channel (40) in a surface of an annular ring (28); and
forming a plurality of first radial channels (42a) in the surface of the annular ring (28), the plurality of first radial channels (42a) extending from the circumferential channel (40) to a first edge of the surface;
wherein the circumferential channel (40) fluidly connects the plurality of first radial channels (42a) in the surface of the annular ring (28); and
wherein the circumferential channel (40) and the plurality of first radial channels (42a) are configured to take up less than ten percent of a surface area of the surface of the annular ring (28).

13. The method of claim 12, further comprising:
forming a plurality of second radial channels (42b) in the surface of the annular ring, the plurality of second radial channels (42b) extending from the circumferential channel toward a second edge (38) of the surface;
wherein the circumferential channel (40) fluidly connects the plurality of first radial channels (42a) in the surface of the annular ring and the plurality of second radial channels (42b) in the surface of the annular ring (28).

14. The method of claim 12, wherein the formed circumferential channel (40), the plurality of first radial channels (42a), and the plurality of second radial channels (42b) take up less than five percent of a surface area of the surface of the annular ring (28).

15. The method of claim 12, wherein the formed circumferential channel (40), the plurality of first radial channels (42a), and the plurality of second radial channels (42b) are formed via laser engraving.

## Patentansprüche

1. Hydrostatische Dichtungsanordnung (10) zum dichten Einschließen einer Flüssigkeit, die Folgendes umfasst:
einen ersten Ring (28) mit einer ersten Seite (32), die durch eine erste Kante (36) und eine zweite Kante (38) begrenzt ist; und
einen zweiten Ring (18) mit einer zweiten Seite (24), die der ersten Seite zugewandt ist;
wobei sich ein umlaufender Kanal (40) entlang der ersten Seite (32) zwischen, und beabstandet von, der ersten Kante (36) und der zweiten Kante (38) erstreckt;
wobei sich mehrere Unterkanäle (42) von dem umlaufenden Kanal (40) entlang der ersten Seite (32) des ersten Rings (28) erstrecken;
wobei der erste Ring (28) und der zweite Ring (18) eine hydrostatische Dichtung zwischen der ersten Seite (32) und der zweiten Seite (24) bilden,
**dadurch gekennzeichnet, dass** der umlaufende Kanal (40) und die mehreren Unterkanäle (42) so konfiguriert sind, dass sie weniger als zehn Prozent einer Oberfläche der ersten Seite (32) einnehmen.

2. Dichtungsanordnung (10) nach Anspruch 1, wobei die mehreren Unterkanäle (42) mehrere erste Unterkanäle (42a) umfassen, die sich von dem umlaufenden Kanal (40) zur ersten Kante (36) entlang der ersten Seite (32) des ersten Rings (28) erstrecken, und
wobei der umlaufende Kanal (40) und die mehreren ersten Unterkanäle (42a) das Einleiten von Fluid zwischen der ersten Seite (32) des ersten Rings (28) und der zweiten Seite (24) des zweiten Rings (18) fördern, was einen hydrostatischen Auftrieb zwischen der ersten Seite (32) des ersten Rings (28) und der zweiten Seite (24) des zweiten Rings (18) bewirkt.

3. Dichtungsanordnung (10) nach Anspruch 2, wobei die mehreren Unterkanäle (42) mehrere zweite Unterkanäle (42b) umfassen, die sich entlang der ersten Seite (32) von dem umlaufenden Kanal (40) in Richtung der zweiten Kante (38) erstrecken, und
wobei sich die mehreren sich von dem umlaufenden Kanal (40) erstreckenden Unterkanäle (42) auf der ersten Seite (32) des ersten Rings (28) befinden, so dass sich erste Unterkanäle der mehreren ersten Unterkanäle (42a) und zweite Unterkanäle der mehreren zweiten Unterkanäle (42b) von dem umlaufenden Kanal (40) in einer alternierenden Reihenfolge entlang einer Länge des umlaufenden Kanals erstrecken.

4. Dichtungsanordnung (10) nach Anspruch 2, wobei sich ein zweiter Unterkanal der mehreren zweiten Unterkanäle (42b) von dem umlaufenden Kanal (40) zu einem von der zweiten Kante (38) beabstandeten Abschlussende (44) erstreckt.

5. Dichtungsanordnung (10) nach Anspruch 2, wobei ein Verhältnis eines Umfangsabstands zwischen jedem ersten Unterkanal der mehreren ersten Unterkanäle (42a) zu einer radialen Spannweite jedes ersten Unterkanals etwa 8 und optional etwa 4 beträgt.

6. Dichtungsanordnung (10) nach Anspruch 2, wobei die erste Kante (36) des ersten Rings (28) so konfiguriert ist, dass sie sich auf einer druckbeaufschlagten Seite der Dichtung befindet und die Dichtung so konfiguriert ist, dass sie gegen Drücke auf der druckbeaufschlagten Seite der Dichtung in einem Bereich von etwa 41,4 bar (600 psi) bis etwa 68,9 bar (1000 psi) abdichtet.

7. Dichtungsanordnung (10) nach Anspruch 1, wobei der umlaufende Kanal (40) koaxial mit der ersten Kante (36) und/oder der zweiten Kante (38) ist und einen ersten Umlaufender-Kanal-Abschnitt (40a) und einen zweiten Umlaufender-Kanal-Abschnitt (40b) aufweist, der fluidisch vom ersten Umlaufender-Kanal-Abschnitt getrennt ist.

8. Dichtungsanordnung (10) nach Anspruch 1, wobei die erste Seite (32) des ersten Rings (28) eine Breite hat, die sich von der ersten Kante (36) zur zweiten Kante (38) erstreckt, und der umlaufende Kanal (40) von der ersten Kante (36) um einen Abstand von einem Drittel der Breite der ersten Seite (32) des ersten Rings (28) beabstandet ist.

9. Dichtungsanordnung (10) nach Anspruch 1, wobei der umlaufende Kanal (40) eine Tiefe von etwa 0,051 mm (0,002 Zoll) hat.

10. Dichtungsanordnung (10) nach Anspruch 1, wobei der umlaufende Kanal (40) eine Breite zwischen etwa 0,025 mm (0,001 Zoll) und 0,152 mm (0,006 Zoll) hat.

11. Dichtungsanordnung (10) nach Anspruch 1, wobei die erste Seite (32) des ersten Rings (28) und/oder die zweite Seite (24) des zweiten Rings (18) aus einem oder mehreren Materialien gebildet sind, die aus einer Gruppe bestehend aus Kohlenstoff, Siliziumkarbid und Wolframkarbid ausgewählt sind.

12. Verfahren zur Herstellung eines kreisförmigen Rings für eine hydrostatische Dichtungsanordnung (10), wobei das Verfahren Folgendes umfasst:
Ausbilden eines umlaufenden Kanals (40) in einer Oberfläche eines kreisförmigen Rings (28); und
Ausbilden mehrerer erster radialer Kanäle (42a) in der Oberfläche des kreisförmigen Rings (28), wobei sich die mehreren ersten radialen Kanäle (42a) von dem umlaufenden Kanal (40) zu einer ersten Kante der Oberfläche erstrecken;
wobei der umlaufende Kanal (40) die mehreren ersten radialen Kanäle (42a) in der Oberfläche des kreisförmigen Rings (28) fluidisch verbindet; und
wobei der umlaufende Kanal (40) und die mehreren ersten radialen Kanäle (42a) so konfiguriert sind, dass sie weniger als zehn Prozent eines Flächeninhalts der Oberfläche des kreisförmigen Rings (28) einnehmen.

13. Verfahren nach Anspruch 12, das ferner Folgendes umfasst:
Ausbilden mehrerer zweiter radialer Kanäle (42b) in der Oberfläche des kreisförmigen Rings, wobei sich die mehreren zweiten radialen Kanäle (42b) von dem umlaufenden Kanal zu einer zweiten Kante (38) der Oberfläche erstrecken;
wobei der umlaufende Kanal (40) die mehreren ersten radialen Kanäle (42a) in der Oberfläche des kreisförmigen Rings und die mehreren zweiten radialen Kanäle (42b) in der Oberfläche des kreisförmigen Rings (28) fluidisch verbindet.

14. Verfahren nach Anspruch 12, wobei der gebildete umlaufende Kanal (40), die mehreren ersten radialen Kanäle (42a) und die mehreren zweiten radialen Kanäle (42b) weniger als fünf Prozent des Flächeninhalts der Oberfläche des kreisförmigen Rings (28) einnehmen.

15. Verfahren nach Anspruch 12, wobei der gebildete umlaufende Kanal (40), die mehreren ersten radialen Kanäle (42a) und die mehreren zweiten radialen Kanäle (42b) durch Lasergravur gebildet werden.

## Revendications

1. Ensemble de joint hydrostatique (10) pour assurer l'étanchéité d'un liquide comprenant :
une première bague (28) ayant un premier côté (32) limité par un premier bord (36) et un deuxième bord (38) ; et
une deuxième bague (18) ayant un deuxième côté (24) faisant face au premier côté ;
dans lequel un canal circonférentiel (40) s'étend le long du premier côté (32) entre, et espacé du premier bord (36) et du deuxième bord (38) ;
dans lequel une pluralité de sous-canaux (42) s'étendent à partir du canal circonférentiel (40) le long du premier côté (32) de la première bague (28) ;
dans lequel la première bague (28) et la deuxième bague (18) forment un joint hydrostatique entre le premier côté (32) et le deuxième côté (24),
**caractérisé en ce que** le canal circonférentiel (40) et la pluralité de sous-canaux (42) sont configurés pour occuper moins de dix pour cent d'une superficie du premier côté (32).

2. Ensemble joint (10) de la revendication 1, dans lequel la pluralité de sous-canaux (42) incluent une pluralité de premiers sous-canaux (42a) s'étendant à partir du canal circonférentiel (40) jusqu'au premier bord (36) le long du premier côté (32) de la première bague (28), et
dans lequel le canal circonférentiel (40) et la pluralité de premiers sous-canaux (42a) favorisent l'introduction de fluide entre le premier côté (32) de la première bague (28) et le deuxième côté (24) de la deuxième bague (18) provoquant ainsi un levage hydrostatique entre le premier côté (32) de la première bague (28) et le deuxième côté (24) de la deuxième bague (18).

3. Ensemble joint (10) de la revendication 2, dans lequel la pluralité de sous-canaux (42) incluent une pluralité de deuxièmes sous-canaux (42b) s'étendant le long du premier côté (32) à partir du canal circonférentiel (40) vers le deuxième bord (38), et
dans lequel la pluralité de sous-canaux (42) s'étendant à partir du canal circonférentiel (40) sont localisés sur le premier côté (32) de la première bague (28) de telle sorte que des premiers sous-canaux de la pluralité de premiers sous-canaux (42a) et des deuxièmes sous-canaux de la pluralité de deuxièmes sous-canaux (42b) s'étendent à partir du canal circonférentiel (40) suivant un ordre alternant le long d'une longueur du canal circonférentiel.

4. Ensemble joint (10) de la revendication 2, dans lequel un deuxième sous-canal de la pluralité de deuxièmes sous-canaux (42b) s'étend à partir du canal circonférentiel (40) jusqu'à une extrémité terminale (44) laquelle est espacée du deuxième bord (38).

5. Ensemble joint (10) de la revendication 2, dans lequel un rapport d'une distance circonférentielle entre chaque premier sous-canal de la pluralité de premiers sous-canaux (42a) à une portée radiale de chaque premier sous-canal est d'environ 8 et, facultativement, est d'environ 4.

6. Ensemble joint (10) de la revendication 2, dans lequel le premier bord (36) de la première bague (28) est configuré pour se trouver sur un côté pressurisé du joint et le joint est configuré pour offrir une étanchéité contre des pressions sur le côté pressurisé du joint au sein d'une plage d'environ 41,4 bar (600 psi) à environ 68,9 bar (1000 psi).

7. Ensemble joint (10) de la revendication 1, dans lequel le canal circonférentiel (40) est coaxial avec un bord, ou les deux, parmi le premier bord (36) et le deuxième bord (38) et inclut une première portion de canal circonférentiel (40a) et une deuxième portion de canal circonférentiel (40b) séparée fluidiquement de la première portion de canal circonférentiel.

8. Ensemble joint (10) de la revendication 1, dans lequel le premier côté (32) de la première bague (28) a une largeur s'étendant à partir du premier bord (36) jusqu'au deuxième bord (38) et le canal circonférentiel (40) est espacé du premier bord (36) d'une distance d'un tiers de la largeur du premier côté (32) de la première bague (28).

9. Ensemble joint (10) de la revendication 1, dans lequel le canal circonférentiel (40) a une profondeur d'environ 0,051 mm (0,002 pouce).

10. Ensemble joint (10) de la revendication 1, dans lequel le canal circonférentiel (40) a une largeur entre environ 0,025 mm (0,001 pouce) et 0,152 mm (0,006 pouce).

11. Ensemble joint (10) de la revendication 1, dans lequel un côté, ou les deux, parmi le premier côté (32) de la première bague (28) et le deuxième côté (24) de la deuxième bague (18) sont formés à partir d'un ou de plusieurs matériaux sélectionnés à partir d'un groupe consistant en carbone, carbure de silicium, et carbure de tungstène.

12. Procédé de formation d'une bague annulaire pour un ensemble de joint hydrostatique (10), le procédé comprenant :
le fait de former un canal circonférentiel (40) dans une surface d'une bague annulaire (28) ; et
le fait de former une pluralité de premiers canaux radiaux (42a) dans la surface de la bague annulaire (28), la pluralité de premiers canaux radiaux (42a) s'étendant à partir du canal circonférentiel (40) jusqu'à un premier bord de la surface ;
dans lequel le canal circonférentiel (40) raccorde fluidiquement la pluralité de premiers canaux radiaux (42a) dans la surface de la bague annulaire (28) ; et
dans lequel le canal circonférentiel (40) et la pluralité de premiers canaux radiaux (42a) sont configurés pour occuper moins de dix pour cent d'une superficie de la surface de la bague annulaire (28).

13. Procédé de la revendication 12, comprenant en outre :
le fait de former une pluralité de deuxièmes canaux radiaux (42b) dans la surface de la bague annulaire, la pluralité de deuxièmes canaux radiaux (42b) s'étendant à partir du canal circonférentiel vers un deuxième bord (38) de la surface ;
dans lequel le canal circonférentiel (40) raccorde fluidiquement la pluralité de premiers canaux radiaux (42a) dans la surface de la bague annulaire et la pluralité de deuxièmes canaux radiaux (42b) dans la surface de la bague annulaire (28).

14. Procédé de la revendication 12, dans lequel le canal circonférentiel formé (40), la pluralité de premiers canaux radiaux (42a), et la pluralité de deuxièmes canaux radiaux (42b) occupent moins de cinq pour cent d'une superficie de la surface de la bague annulaire (28).

15. Procédé de la revendication 12, dans lequel le canal circonférentiel formé (40), la pluralité de premiers canaux radiaux (42a), et la pluralité de deuxièmes canaux radiaux (42b) sont formés par l'intermédiaire d'une gravure laser.
